(19) Europäisches Patentamt
European Patent Office
Office européen des brevets

(11) **EP 0 803 994 B1**

(12) **EUROPEAN PATENT SPECIFICATION**

(45) Date of publication and mention
of the grant of the patent:
**18.07.2007   Bulletin 2007/29**

(51) Int Cl.:
***H04B 7/26*** (2006.01)

(21) Application number: **97106448.0**

(22) Date of filing: **18.04.1997**

(54) **Method to obtain and synchronize the radio multiframe number in DECT cordless systems**

Verfahren zum Erlangen und Synchronisieren der Mehrrahmfunkgrösse in einem drahtlosen DECT-System

Méthode pour obtenir et synchroniser le nombre radio multitrame dans un système sans fil DECT

(84) Designated Contracting States:
**BE DE FI FR GB IT NL SE**

(30) Priority: **22.04.1996  IT   MI960785**

(43) Date of publication of application:
**29.10.1997   Bulletin 1997/44**

(73) Proprietor: **Italtel S.p.a.**
**Castelletto, 20019 Settimo Milanese (IT)**

(72) Inventors:
• **Albertini, Samuele**
  **20146 Milano (IT)**
• **Dal Zotto, Marco**
  **20020 Arese (MI) (IT)**

(74) Representative: **Capasso, Olga et al**
**de Simone & Partners**
**Via Vincenzo Bellini, 20**
**00198 Roma (IT)**

(56) References cited:
**WO-A-96/33560**         **US-A- 5 367 524**

• **ETSI: ETS 300 175-2, [Online] September 1996 (1996-09), XP002136766 ISBN: 2-7437-0949-9 Retrieved from the Internet: <URL:http://www.etsi.org> [retrieved on 2000-05-02]**
• **ARIYAVISITAKUL S ET AL: "NETWORK SYNCHRONISATION OF RADIO PORTS IN WIRELESS PERSONAL COMMUNICATIONS" ELECTRONICS LETTERS,GB,IEE STEVENAGE, vol. 28, no. 25, 3 December 1992 (1992-12-03), pages 2312-2314, XP000332623 ISSN: 0013-5194**

**Description**

Field of the invention

The present invention relates to personal telephone system, that is systems suitable to transreceiving digital signals between mobile systems and fixed stations in a cordless system.

In particular the invention finds its preferred, but not limited, application in the DECT (Digital European Cordless Telecommunications) system representing a European standard for "Cordless" type radio telecommunication systems, capable to offer sound and data services. In the frame of this type of systems, the invention makes reference to a method to obtain the parameter called radio multiframe number or MFN (Multi Frame Number) starting from an absolute time reference.

Personal telephone systems include a plurality of radio fixed transceiver stations distributed in order to cover the concerned areas and connected to a switching network, which can be the public one or a private switching network (PABX) and portable user sets connecting themselves via radio to the fixed parts and able therefore to communicate between them and with other fixed users connected to the public network. Connections can be of the voice type or enable data exchange occupying the equivalent of one or more voice channels.

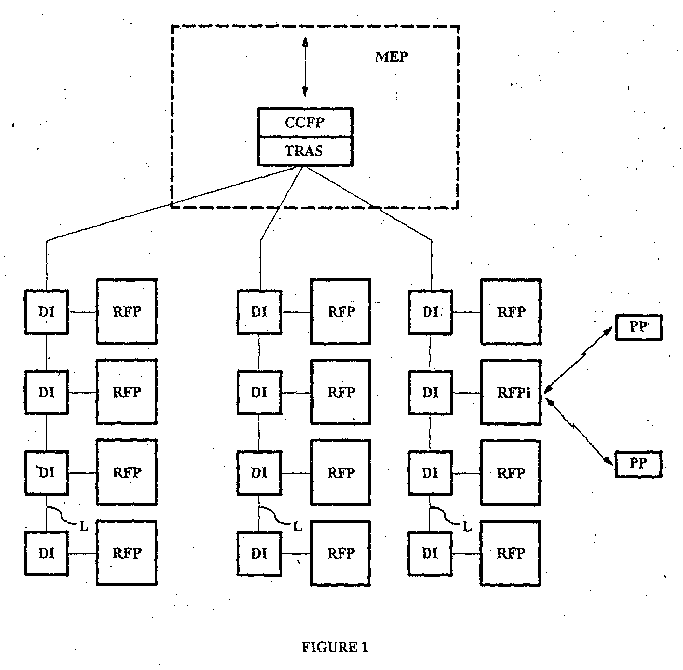

A typical structure of the DECT network is outlined as an example in Figure 1.

It includes groupings of k (in the example shown in the figure k = 4) radio fixed parts RFP preferably connected to branches (in the example 3 branches) formed of connection or dorsal lines L through drop/insert devices DI. Each fixed part RFP can manage via radio a given number of PP (Portable Part) users, which are generally mobile ones.

The branches revert to a transcoder battery TRAS, and this last is connected to the public network PSTN (Public Switching Telephone Network) through a central control fixed part CCFP, associated to a switching network or peripheral advanced module MEP.

The interface between the CCFP and the DECT network, as far as the voice signal is concerned, typically consists of 64 Kbit/s digital channels (8000 samples/sec. each one coded through 8 bits). The CCFP unit is associated to a battery of transcoders performing the conversion of the PCM coding on eight bits when used on the PSTN side, in ADPCM coding (Adaptive Differential Pulse Code Modulation), on four bits when used on DECT side. The 2.048 Mbit/s dorsal (bi-directional) connecting the CCFP to the different radio fixed parts RFP supports therefore 48 voice channels plus a pre-set number of synchronization and signalling channels.

The area covered by a fixed part or cell is generally rather reduced, reaching coverings even in the range of tenths or hundreds of metres of radius. Typical applications of personal telephone systems are encountered in industrial installations where they can substitute the laying of a cabled network, in commercial complexes or urban centres, where they can advantageously replace public telephone call boxes and others.

The telecommunication network for personal calls is of the digital type. The radio access falls under the FDMA - TDMA - TDD class.

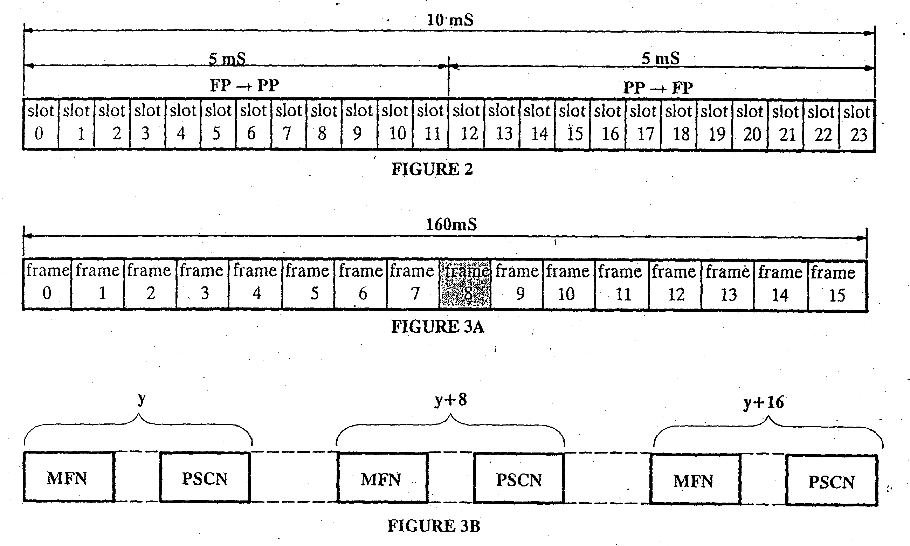

The system is of the TDD (Time Division Duplex) type since transmission and reception do not take place at the same time. More in detail, as shown referring to figure 2, the 10 millisecond basic frame is divided into to halves: in general, during the first 5 ms, the fixed part transmits and portable sets receive (TX DECT half frame for the fixed part, and RX DECT for the portable set), and during the subsequent 5 ms, the reverse operation takes place. Each half-frame consists of 12 time slots (the system is a TDMA one, due to this reason), each of them consistihg of 420 (or 424, according to the case) bits. Time slots are transmitted or received using 10 (or more) different frequencies (the system is a FDMA one due to this reason) totalling 120 (or more) slots available to the system, which are allocated time by time in order not to create interference problems.

The DECT system foresees logic channels, among which the one called "System Information Channel" or "Q" channel. It is a broadcast type channel, that is it is employed to send information on services offered and on access methods to several users, through which the Fixed Part (FP) of the system, considered as the CCFP and RFPs, gives useful information on the system to mobile users. This channel emits different information time by time, which is cyclically repeated.

As shown in Fig. 3a, the transmission of the Q channel takes place only in frame 8 of each multiframe. Among information sent on this channel there is the one enabling the FP and the PP to act in a synchronous way on the air interface, called Common Interface (CI).

One of said information, called Multi Frame Number (MFN), is used to assure that the radio fixed part RFP and the radio portable part PP are aligned as for the multiframe information; this information is necessary for ciphering. The Multiframe Number (MFN) in the DECT system consists of 24 bits and is used to support the ciphering procedure (encryption or ciphering) of a connection in order to assure the confidentiality of information transmitted. In the standard DECT ciphering algorithm, said MFN number is used (in the known way and not furtherly herein described) together with the frame number and a cipher key (CK, Cipher Key).

As it is known, a radio fixed part RFP explores in succession the frequencies of the carriers it supports, searching for possible connection requests of portable sets. Said scanning takes place at the rate of one frequency per frame, that is the radio fixed part remains tuned on a given frequency for the time of a receipt half frame and, during the next frame, it remains tuned on another frequency, and so on. Frequencies in the DECT environment are conventionally numbered 0 to N-1, starting from the higher one in the emission spectrum, where N indicates the number of frequencies supported.

On the Q channel an information is transmitted, the so-called receiver scan carrier number PSCN (Primary Receiver Scan Carrier Number), enabling the PP to know the radiofrequency carrier under scanning, on which the radio fixed part shall remain tuned in the next frame. Said information consists of a 6 bit figure, typically indicating in tenths the values 0 to 9 in the case 10 frequencies are carried.

The two data consisting of the MFN and PSCN shall not necessarily be sent to each 160 ms multi frame and the two parameters are actually transmitted through messages sent at different times on the Q channel, however, said data shall reach the mobile radio parts at reasonable intervals. In particular, the DECT standard foresees for both the MFN and PSCN parameters, a minimum transmission frequency of 8 multiframes, that is approximately a maximum time between two transmissions of each parameter, not higher than 8x160 ms. This situation is outlined in Fig. 3B.

The non continuous availability of the MFN parameter, involves longer waiting times at set up of a call, since the radio mobile part has to wait after the acquisition of the MFN parameter, for a time ranging from 1 to 7 multiframes to known when it can start the transmission sure to be listened by the radio fixed part.

Likewise, the non continuous availability of the PSCN parameter involves further delays in the case of connections requiring ciphering and then the acquisition of the MFN parameter by PP, which represent a considerable part of the traffic exchanged.

The problem of the delay on time for acquisition of useful information in the PP, is more serious in handover conditions, and in particular in case of "external handover". As it is known, when the portable part goes from a cell to the adjacent one, a procedure is made re-addressing a connection underway on a physical channel towards another physical channel. This procedure is necessary to enable to continuously hold a call at the maximum possible quality level, in presence of moves of the mobile part or variations of the surrounding radio environment.

The DECT standard foresees a handover with channel change (intended as slot/frequency pair), of the hard type, seamless made and under the direct control of the mobile unit, which has the faculty to decide to enable this procedure. The handover is also of the forward type since all the signals required to the same, transit on the new radio channel set in parallel to the old one. Handover procedures foresee the change of lowest level connections, maintaining upper level ones; this enables to assure different types of handover, with difference performances. In particular the external handover is the switching process of a call from a DECT system to another one, separate from the first one, the synchronization to the CI and particularly the alignment of MFN and PSCN parameters is not generally assured between them.

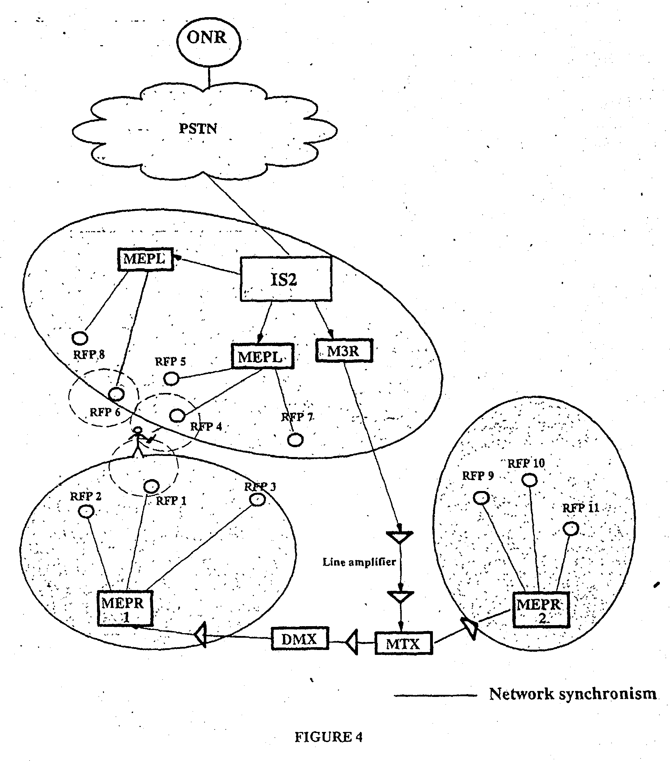

As shown in Fig. 4, it can occur that some areas covered by RFP, connected to different MEPs respectively can be adjacent from the geographical point of view.

Moreover, even if PP users of a DECT networks are users moving at low speed, it could occur that a user moves, during the call, from the area covered by a radio fixed part RFP connected to a given MEP to an area covered by another RFP connected to a different MEP.

Therefore, external handover generally means the switching process of a call from a DECT system to another one or from different MEPs inside the same DECT system (Fig. 4, shows adjacent or partially overlapped cells connected to the different MEPL and MEPR).

To obtain the external handover, synchronization to the CI and particularly the alignment of MFN and PSCN parameters have to be assured.

Background Art

Due to the fact that the DECT standard foresees, as described above, the emission in the Q channel of the multiframe number MFN and of the carrier number scanned by the PSCN receiver, the controller of said system shall assure the synchronization of said two central references (PSCN and MFN), with rather stringent technical requirements which can be obtained with expensive synchronization techniques, such as for instance satellite ones.

Scope of the Invention

Scope of this invention is to reduce synchronization problems to be guaranteed by the controller, in particular, synchronization problems concerning the MFN parameter.

Another scope is to minimize the time required to establish an "external handover" procedure (thus reducing the noise heard by the user) and in general, to minimize waiting times deriving from the need to receive the above mentioned PSCN and MFN information which as said above, could be received in cycles every 8*160 ms.

Summary of the invention

The invention foresees to obtain the MFN parameter from an absolute time reference. A reference suitable to said scope appears to be a signal obtained by the GPS system (Global Positioning System). As it is well known, the GPS system, implemented by the Department of Defence USA to navigation and positioning purposes, is based on 24 satellites over 6 polar spherical orbits having a radius of 20200 kms approx. Each orbit includes 4 satellites, each one performing a revolution every 12 sideral hours. Each satellite is equipped with two cesium clocks and with two rubidium clocks monitored from the ground and slaved to the UTC-USNO by different ground stations.

Each satellite sends every second, on a 1.57542 GHz carrier, information on its identity, position in the space and time data formed by a sequence of 1PPS pulses and messages representing the so-called Time-of-day.

Time, frequency and position data can be obtained through a GPS receiver placed on the earth surface.

Said data are rather accurate to enable the alignment and synchronization of the parameters of the DECT system.

In particular the invention consists of a method to synchronize the parameter called radio multi frame number in DECT cordless systems including radio fixed parts connected to one switching network at least, through one central control fixed part at least, said radio fixed parts performing ciphering procedures depending on said radio multi frame number (MFN) increased by one unit every 160 ms period, said radio multi frame number being included between 0 and $2^n$, being n an integer number.

The method is characterized in that it foresees the following steps:

a) associating to each switching network a GPS receiver, suitable to receive, at a pre-set interval, messages containing data called "time of day", showing an absolute accuracy not lower than a pre-set magnitude;

b) associating to each switching network, means suitable to select one message among the above mentioned ones as reference signal common to all said radio fixed stations;

c) obtaining a current time signal indicating the current date, time minute and second from said information called "time of day";

d) calculating the time interval $\Delta t$ elapsed between said reference signal and said current time signal;

e) calculating the above mentioned parameter called radio multiframe number in respect with the duration of said time interval $\Delta t$.

The features of the present invention which are believed to be novel are set forth with particularity in the appended claims.

Brief description of figures

The invention shall be now described more in detail making reference to a preferred embodiment, but not limited to the same, together with the attached drawings where:

Fig. 1, already described, is a general diagram showing the structure of a DECT cordless system;
Fig. 2, already described, shows the organization of a DECT frame and its subdivision in the two downlink and uplink half frames;
Fig. 3A, already described, shows the organization of the DECT multiframe;
Fig. 3B, already described, shows the transmission of MFN and PCSN data;
Fig. 4 already described, shows an external handover scenario;
Fig. 5 shows the arrangement of GPS receivers in the diagram of Fig. 4;
Fig. 6 shows the wave form of the 1 pps signal coming out from one of the GPS receivers of Fig. 5.
Fig. 7 shows the course of the MFN signal in the time;
Fig. 8 shows the course of the $N_{(160 ms)}$ value in the time;
Fig. 9 shows the course of the $N_{(MFN)}$ value in the time;
Fig. 10 shows the course of the $MFN_C$ value in the time;

Detailed description of a preferred embodiment

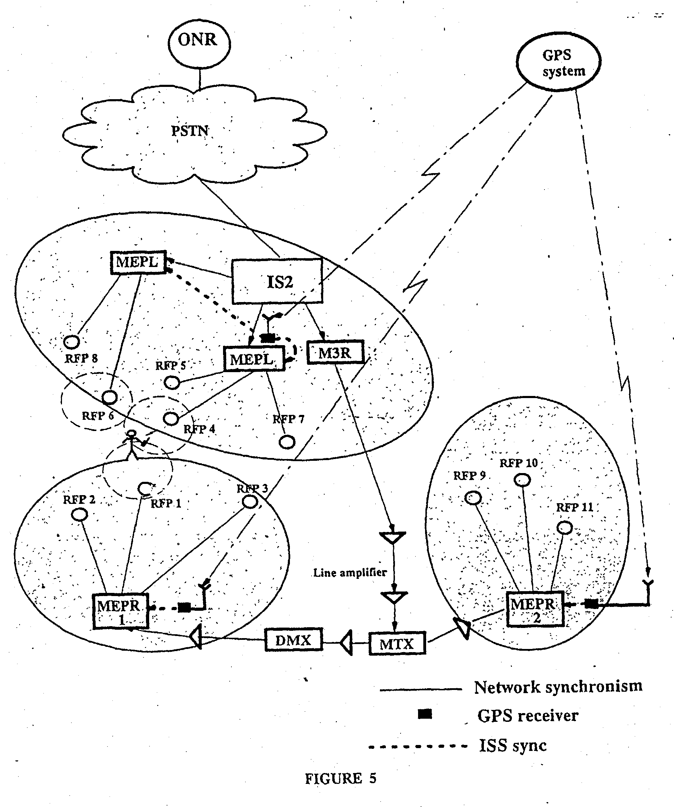

Making reference to Fig. 5, a plurality of GPS receivers are connected to MEPL or MEPR modules respectively, to which different the RFPs of DECT cordless systems are connected. Whenever two or more MEPL modules would be inside a same building, or at a short distance, they could be connected to a unique GPS receiver. Each remote module MEPR shall on the contrary, be connected to a respective GPS receiver.

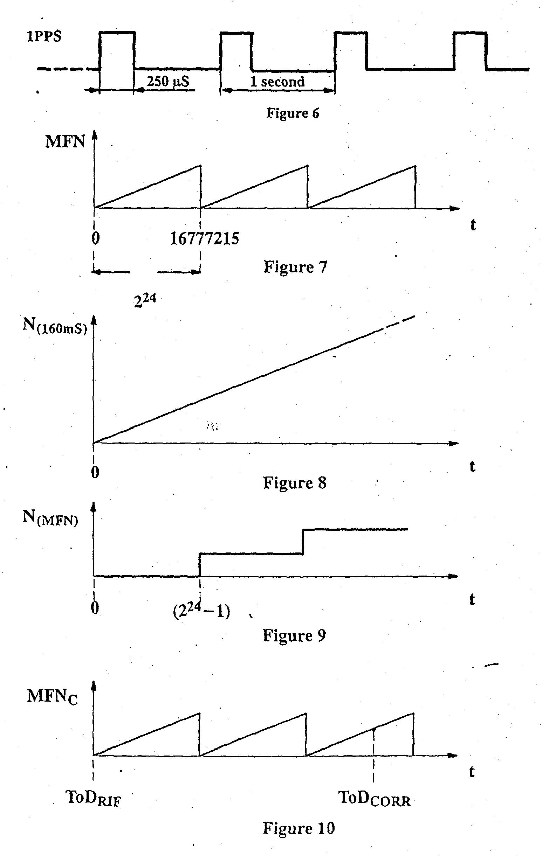

GPS receivers give at output a 1 pps signal whose wave form is shown in Fig. 6. Said 1 pps signal consists of a rectangular signal with one second period and pulse amplitude preferably equal to 250 $\mu$s. The absolute accuracy assured is better than +/-150 ns.

As shown in Fig. 7, the multi frame number MFN, consisting of 24 bits, resets at the starting value 0 after having reached value 16777215 ($2^{24}$-1).

Since the multiframe number MFN is increased by one unit every 160 ms, it has a periodicity of 745 hours approx.

The time of day signal, which is emitted every second by the GPS system through a specific message, contains information concerning the year, month, day, time, minute and second.

The method at the basis of the present invention is applicable of course provided that radio multi frames are aligned among them and to this purpose, teachings of patent application submitted by the same applicant under the title "Method for the synchronization, particularly with GPS signals, between Radio Fixed Parts in a DECT cordless system" can be used.

According to the invention, among 1 PPS pulses emitted by the GPS system, a particular pulse is selected and used as reference pulse. Said reference pulse shall be hereinafter identified $ToD_{rif}$.

The principle according to which this reference pulse is set can be any criterion, provided that it is the same for all DECT systems destined to be synchronized.

Once a common time reference value is set, the multiframe number value could be obtained from each peripheral advanced module MEP (or from groupings of local peripheral advanced contiguous modules (MEPL)) on the basis of the following method.

Always starting from the 1PPS pulse generated by the GPS system, the $ToD_{corr}$ value is obtained, indicating the current date and time. In particular the $ToD_{corr}$ value is not obtained coinciding with whichever 1PPS pulse emitted every second by the GPS system, but coinciding with a pulse meeting the condition according to which the number of seconds elapsed from the $ToD_{rif}$ reference pulse is integer multiple of 4.

The time interval $\Delta t$ so obtained, is subdivided into periods of T = 4 sec.

The number of 160 ms periods included in the $\Delta t$ interval, indicated with $N_{(160\,ms)}$, is obtained as follows:

$$N_{(160\,ms)} = [(ToD_{corr} - ToD_{rif})/4]*25$$

In fact 25 is the number of 160 ms periods present in a 4 sec. interval. The trend in time of the $N_{(160\,ms)}$ value is shown referring to the diagram in Fig.8.

Once the $N_{(160\,ms)}$ value is obtained, the number of times the multiframe number has completely repeated in the $\Delta t$ time interval, is obtained as follows:

$$N_{(MFN)} = Integer[N_{(160\,ms)}/2^{24}]$$

The trend in time of the $N_{(160\,ms)}$ value is shown referring to the diagram in Fig.9.

Once the $N_{(MFN)}$ value is obtained, the value of the multiframe number that all RFPs must have coinciding with the $ToD_{corr}$ instant, is obtained as follows:

$$MFN_C = N_{(160\,ms)} - [N_{(MFN)} *2^{24}]$$

The trend in time of the $MFN_C$ value is shown referring to the diagram in Fig. 10.

The advantages of the invention are well evident.

Thanks to this method, each peripheral advanced module MEP (or each grouping of local peripheral advanced modules MEPL) results to be able to obtain at any moment the value of the multiframe number, separately from all the other ones.

Thanks to the GPS system characteristics, this value, even if obtained in an absolutely separate way among the RFPs of different DECT systems, shall be the same for all RFPs sharing the same reference instant $ToD_{rif}$.

It could be appreciated that, thanks to the invention, the simple unification of the selection criterion of the $ToD_{nf}$ instant shall be enough to synchronize multiframe numbers of DECT systems of any type through GPS signals.

The absolute simplicity of the calculation algorithm allows simple and low expensive implementations.

Therefore, while a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

In particular the extension of the method according to the present invention to other absolute signal acquisition methods apart from the above mentioned GPS system, appears evident as it is evident to obtain the MFN parameter from each RFP instead of from RFP groupings.

## Claims

1. Method to synchronize the parameter called radio multiframe number (MFN) in DECT cordless systems including radio fixed parts (RFP) connected to one switching network at least (MEPL or MEPR) through one central control fixed part at least (CCFP), said radio fixed parts performing coding procedures depending on said radio multiframe number (MFN) increased by one unit every 160 ms period, said multiframe number being included between 0 and $2^n$, being n an integer number, **characterized in that** it foresees the following steps:

   a) associating to each switching network (MEP), a GPS receiver, suitable to receive, at a pre-set intervals, messages containing data called "time of day" and showing an absolute accuracy not lower than one pre-set extent;
   b) associating to each switching network (MEP), means suitable to select one message among the above mentioned ones as reference signal ($ToD_{rif}$) common to all said radio fixed stations (RFP);
   c) obtaining from said information called "time of day" a current time signal ($ToD_{corr}$) indicating the current time;
   d) calculating the time interval ($\Delta t$) elapsed between said reference signal ($ToD_{rif}$) and said current time signal ($ToD_{corr}$);
   e) calculating the above mentioned parameter called radio multiframe number (MFN) in respect with the duration of said time interval ($\Delta t$).

2. Method according to claim 1, **characterized in that** said calculation step of the above mentioned parameter called radio multiframe number (MFN) in respect with the duration of said time interval ($\Delta t$) foresees also the following steps:

- calculating the number of 160 ms periods ($N_{(160\ ms)}$) included in said time interval ($\Delta t$);
- calculating the number of times ($N_{(MFN)}$) the multiframe number has completely repeated in said time interval ($\Delta t$);
- obtaining the radio multiframe number for the radio fixed part as difference between said number of 160 ms periods ($N_{(160\ ms)}$) and said number of times ($N_{(MFN)}$) when the radio multiframe number has completely repeated multiplied by the 2° value.

3. Method according to claims 1 and 2, **characterized in that** *n* is equal to 24.

4. Method according to claim 1, where said DECT cordless system includes a plurality of (local) switching networks, located in proximity among them (MEPL), **characterized in that** it foresees the step to associate to said plurality of switching networks a sole GPS receiver and foreseeing also the execution in sequence of the above mentioned steps from a) to e).

**Patentansprüche**

1. Verfahren zum Synchronisieren des Parameters, welcher Funk-Mehrfachrahmenzahl (MFN) genannt wird, in drahtlosen DECT-Systemen, welche Funk-Festteile (RFP) umfassen, die durch wenigstens einen zentralen Steuer-Festteil (CCFP) mit wenigstens einem Koppelnetz (MEPL oder MEPR) verbunden sind, wobei die Funk-Festteile Codierprozeduren durchführen, welche von der Funk-Mehrfachrahmenzahl (MFN) abhängen, die jede Periode von 160 ms um eine Einheit erhöht wird, die Mehrfachrahmenzahl zwischen 0 und $2^n$ enthalten ist, und n eine ganze Zahl ist, **dadurch gekennzeichnet, dass** es die folgenden Schritte vorsieht:

a) Zuordnen eines GPS-Empfängers, der geeignet ist, in voreingestellten Intervallen Nachrichten zu empfangen, welche Daten enthalten, die "Tageszeit" genannt werden und eine absolute Genauigkeit nicht unter einem voreingestellten Maß darstellen, zu jedem Koppelnetz (MEP);
b) Zuordnen von Mitteln, welche geeignet sind, eine Nachricht unter den zuvor erwähnten als Referenzsignal ($ToD_{rif}$) auszuwählen, das allen Funk-Festteilen (RFP) gemeinsam ist, zu jedem Koppelnetz (MEP);
c) Erhalten von der Information, welche "Tageszeit" genannt wird, ein aktuelles Zeitsignal ($ToD_{corr}$), welches die aktuelle Zeit angibt;
d) Berechnen des Zeitintervalls ($\Delta t$), das zwischen dem Referenzsignal ($ToD_{rif}$) und dem aktuellen Zeitsignal ($ToD_{corr}$) vergangen ist;
e) Berechnen des zuvor erwähnten Parameters, welcher Funk-Mehrfachrahmenzahl (MFN) genannt wird, in Bezug auf die Dauer des Zeitintervalls ($\Delta t$).

2. Verfahren nach Anspruch 1, **dadurch gekennzeichnet, dass** der Schritt des Berechnens des zuvor erwähnten Parameters, welcher Funk-Mehrfachrahmenzahl (MFN) genannt wird, in Bezug auf die Dauer des Zeitintervalls ($\Delta t$) auch die folgenden Schritte vorsieht:

- Berechnen der Anzahl von 160-ms-Perioden ($N_{(160\ ms)}$), welche in dem Zeitintervall ($\Delta t$) enthalten sind;
- Berechnen der Anzahl von Malen ($N_{(MFN)}$), welche sich die Mehrfachrahmenzahl in dem Zeitintervall ($\Delta t$) zur Gänze wiederholt hat;
- Erhalten der Funk-Mehrfachrahmenzahl für den Funk-Festteil als Differenz zwischen der Anzahl von 160-ms-Perioden ($N_{(160\ ms)}$) und der Anzahl von Malen ($N_{(MFN)}$), wenn sich die Funk-Mehrfachrahmenzahl zur Gänze wiederholt hat, multipliziert mit dem $2^n$-Wert.

3. Verfahren nach Anspruch 1 und 2, **dadurch gekennzeichnet, dass** n gleich 24 ist.

4. Verfahren nach Anspruch 1, wobei das drahtlose DECT-System eine Mehrzahl von (lokalen) Koppelnetzen umfasst, welche in Nachbarschaft zueinander angeordnet sind (MEPL), **dadurch gekennzeichnet, dass** es den Schritt des Zuordnens eines einzigen GPS-Empfängers zu der Mehrzahl von Koppelnetzen und Vorsehen auch der Ausführung in der Reihenfolge der zuvor erwähnten Schritte von a) bis e) vorsieht.

**Revendications**

1. Procédé pour synchroniser le paramètre appelé nombre multi-trames radio (MFN) dans les systèmes sans fil DECT incluant des éléments fixes radio (RFP) connectés à au moins un réseau de commutation (MEPL ou MEPR) par l'intermédiaire d'au moins un élément fixe de commande centrale (CCFP), lesdits éléments fixes radio effectuant des procédures d'encodage en prenant en compte ledit nombre multi-trames radio (MFN) augmenté d'une unité à chaque période de 160 ms, ledit nombre multi-trames étant compris entre 0 et 2, étant un nombre entier n, **caractérisé en ce qu'**il prévoit les étapes suivantes:

a) Associer à chaque réseau de commutation (MEP) un récepteur GPS, apte à recevoir à des intervalles prédéterminés, des messages contenant des données appelées « heure du jour » et présentant une précision absolue qui ne soit pas inférieure à une valeur prédéterminée ;

b) Associer à chaque réseau de commutation (MEP) un moyen approprié pour sélectionner un message parmi ceux mentionnés ci-dessus comme signal de référence ($ToD_{ref}$) commun à toutes lesdites stations fixes radio (RFP) ;

c) Obtenir à partir de ladite information appelée « heure du jour » un signal horaire actuel ($ToD_{curr}$) indiquant le temps actuel ;

d) Calculer l'intervalle de temps ($\Delta t$) écoulé entre ledit signal de référence ($ToD_{ref}$) et ledit signal horaire actuel ($ToD_{curr}$) ;

e) Calculer le paramètre mentionné ci-dessus appelé nombre multi-trames radio (MFN) respectivement à la durée dudit intervalle de temps ($\Delta t$).

2. Procédé selon la revendication 1, **caractérisé en ce que** ladite étape de calcul du paramètre mentionné ci-dessus appelé nombre multi-trames radio (MFN) respectivement à la durée dudit intervalle de temps ($\Delta t$) prévoit également les étapes suivantes :

- Calculer le nombre de périodes de 160 ms ($N_{160ms}$) incluses dans ledit intervalle de temps ($\Delta t$) ;
- Calculer le nombre de fois ($N_{MFN}$) que le nombre multi-trames a été complètement répété dans ledit intervalle de temps ($\Delta t$) ;
- Obtenir le nombre multi-trames radio de l'élément fixe radio comme différence entre ledit nombre de périodes de 160 ms ($N_{160ms}$) et ledit nombre de fois ($N_{MFN}$) que le nombre multi-trames radio a été complètement répété multiplié par la deuxième valeur.

3. Procédé selon les revendications 1 et 2, **caractérisé en ce que** $n$ est égal à 24.

4. Procédé selon la revendication 1, où ledit système sans fil DECT inclut une pluralité de réseaux de commutation (locaux), situés à proximité parmi eux (MEPL), **caractérisé en ce qu'**il prévoit l'étape qui consiste à associer à ladite pluralité de réseaux de commutation un seul récepteur GPS et à prévoir également l'exécution en séquence des étapes mentionnées ci-dessus de a) à e).

FIGURE 1

| 10 mS | | | | | | | | | | | | | | | | | | | | | | | |
|---|---|---|---|---|---|---|---|---|---|---|---|---|---|---|---|---|---|---|---|---|---|---|---|
| 5 mS | | | | | | | | | | | | 5 mS | | | | | | | | | | | |
| FP → PP | | | | | | | | | | | | PP → FP | | | | | | | | | | | |
| slot 0 | slot 1 | slot 2 | slot 3 | slot 4 | slot 5 | slot 6 | slot 7 | slot 8 | slot 9 | slot 10 | slot 11 | slot 12 | slot 13 | slot 14 | slot 15 | slot 16 | slot 17 | slot 18 | slot 19 | slot 20 | slot 21 | slot 22 | slot 23 |

FIGURE 2

| 160mS | | | | | | | | | | | | | | | |
|---|---|---|---|---|---|---|---|---|---|---|---|---|---|---|---|
| frame 0 | frame 1 | frame 2 | frame 3 | frame 4 | frame 5 | frame 6 | frame 7 | frame 8 | frame 9 | frame 10 | frame 11 | frame 12 | frame 13 | frame 14 | frame 15 |

FIGURE 3A

$y$        $y+8$        $y+16$

| MFN | | PSCN | | | MFN | | PSCN | | | MFN | | PSCN |
|---|---|---|---|---|---|---|---|---|---|---|---|---|

FIGURE 3B

FIGURE 4

FIGURE 5

1PPS

250 μS    1 second

Figure 6

MFN

0    16777215

$2^{24}$

Figure 7

$N_{(160mS)}$

0

Figure 8

$N_{(MFN)}$

0    $(2^{24}-1)$

Figure 9

$MFN_C$

$ToD_{RIF}$    $ToD_{CORR}$

Figure 10